# EUROPÄISCHE PATENTSCHRIFT

(11) **EP 1 765 566 B1**
(45) Veröffentlichungstag und Bekanntmachung des Hinweises auf die Patenterteilung: **26.11.2008**
(21) Anmeldenummer: 05749105.2
(22) Anmeldetag: 11.05.2005
(51) Int. Cl.: B29C 45/17

(54) **FORMSCHLIESSEINHEIT**
MOLD CLOSING UNIT
UNITE DE FERMETURE DE MOULE

(30) Priorität: 06.07.2004 DE 102004032521
(43) Veröffentlichungstag der Anmeldung: 28.03.2007
(73) Patentinhaber: Demag Ergotech GmbH, 90571 Schwaig (DE)
(72) Erfinder: DIENO, Kurt, 90574 Rosstal (DE); KÜBEL, Andreas, 91207 Lauf (DE)
(74) Vertreter: Rau, Manfred
(86) Internationale Anmeldenummer: PCT/EP2005/052135
(87) Internationale Veröffentlichungsnummer: WO 2006/003046

(56) Entgegenhaltungen:
- DE-A1- 2 623 392
- DE-C1- 10 161 911
- DE-C1- 10 210 869
- PATENT ABSTRACTS OF JAPAN Bd. 012, Nr. 490 (M-779), 21. Dezember 1988 (1988-12-21) -& JP 63 212522 A (FANUC LTD), 5. September 1988 (1988-09-05)

## Beschreibung

Die Erfindung bezieht sich auf eine Formschließeinheit, insbesondere für eine Spritzgießmaschine, nach dem Oberbegriff des Patentanspruchs 1.

Aus der DE 101 61 911 C1 ist eine Formschließeinheit dieser Art bekannt, bei der die bewegliche Formaufspannplatte zur Formhöhenverstellung mittels einer Spindelmutter mit den im Verstellbereich als Gewindespindel ausgebildeten Führungsholmen in Holmlängsrichtung einstellbar verbunden ist. Eine zwischen der beweglichen Formaufspannplatte und der Spindelmutter wirksame Schaltvorrichtung, etwa in Form eines hydraulischen Stellmotors, gibt in der Lösestellung das zum Verdrehen der Spindelmutter zwischen dieser und der Formaufspannplatte erforderliche Axialspiel frei und verspannt die Spindelmutter im aktivierten Zustand spielfrei und drehfest an der Formaufspannplatte, um so die an der Gewindeverbindung eingestellte Formhöhenposition zu arretieren. Mit einem derartigen Formhöhenverstellsystem lässt sich jedoch das Gewindespiel zwischen Spindelmutter und Führungsholm nicht beseitigen, so dass es an den Hubumkehrpunkten der beweglichen Formaufspannplatte zu einer schlagartig wechselnden Belastung der Gewindeflanken kommt, welche sich in einer höchst störenden Geräuschentwicklung bemerkbar macht, und vor allem müssen die hohen Schließ- und die noch erheblich höheren Verriegelungskräfte zwischen beweglicher Formaufspannplatte und Führungsholm auf dem Wege über den hydraulischen Stellmotor übertragen und dieser demzufolge hochbelastbar dimensioniert werden.

Ferner ist aus der DE 102 10 869 C1 eine Formschließeinheit bekannt, bei der die Abstützplatte für den Hubantrieb, welche mit der feststehenden Formschlussplatte über Führungsholme zugfest verbunden ist, wiederum zur Formhöheneinstellung durch eine Spindelmutter längenverstellbar mit den Holmendabschnitten verschraubt ist. Die Arretierung der Spindelmutter erfolgt hierbei durch eine weitere, mit den Holmen verschraubte Gegenmutter, welche nach Art einer Kontermutter durch zwischen dieser und der Abstützplatte wirkende, federbelastete Zugelemente mit der Spindelmutter verspannt wird. Zum Umschalten der Arretierung in die Lösestellung wird die bewegliche Formaufspannplatte vom Hubantrieb über die normale Öffnungslage hinaus zurückgefahren, um so die Verspannung zwischen Spindelmutter und Kontermutter aufzuheben und die Spindelmutter durch einen externen Drehantrieb in eine neue Formhöhenposition verdrehen zu können. Demzufolge müssen wesentliche Komponenten der Formschließeinheit, nämlich insbesondere der verriegelungskrafterzeugende Hubantrieb und die Führungsholme bezüglich der Holmlänge, bedingt durch den zum Lösen der Formhöheneinstellung erforderlichen Zusatzhub der beweglichen Formaufspannplatte, überdimensioniert werden.

Das Dokument DE-A-2623392 offenbant eine Formschließeinheit gemäß dem Oberbegriff des Anspruchs 1.

Aufgabe der Erfindung ist es, eine Formschließeinheit der eingangs genannten Art so auszubilden, dass ein Lösen und spielfreies Arretieren der Formhöheneinstellung mit einer baulich einfach und kompakt dimensionierten Schalteinheit ohne Unterbrechung des Arbeitszyklus der Formschließeinheit ermöglicht wird.

Diese Aufgabe wird erfindungsgemäß durch die im Patentanspruch 1 gekennzeichnete Formschließeinheit gelöst.

Aufgrund der Zweifachverschraubung der Gewindespindel in Kombination mit einem die Spann- und die Spindelmutter im aktivierten Zustand miteinander und mit der Formschlussplatte verspannenden, von den Verriegelungskräften freigehaltenen Aktuator wird erfindungsgemäß zum Lösen und Arretieren der Formhöheneinstellung anstelle des sonst üblichen, nach Maßgabe der Verriegelungskraft dimensionierten ein vielfach, nämlich bis zu sechsmal leistungsschwächeres Schaltorgan benötigt und dadurch der Platz- und Energiebedarf des Formhöhenverstellsystems signifikant verringert, mit dem weiteren Effekt, dass die Formschlussplatte unter der Spannkraftbeaufschlagung des Aktuators auch bei einem Hubkraftwechsel sowohl axial- als auch gewindespielfrei an der Gewindespindel gesichert bleibt und sich dennoch die Formhöheneinstellung unabhängig von der Hubposition und sogar problemlos während der laufenden Verfahrbewegung der beweglichen Formschlussplatte verändern lässt.

Im Hinblick auf eine weitere bauliche Vereinfachung und erhöhte Schaltzuverlässigkeit ist der Aktuator nach Anspruch 2 vorzugsweise fremdkraftbetätigt in die spannkrafterzeugende Aktivstellung umschaltbar und gelangt unter Fremdkraftentlastung selbsttätig in die Lösestellung, so dass die Schalteinheit von elastischen Vorspann- oder Rückstellelementen völlig freigehalten ist. Nach Anspruch 3 ist der Aktuator vorzugsweise hydraulisch oder pneumatisch betä-tigt, so dass er ohne weiteres in das zumeist ohnehin vorhandene Hydraulik- bzw. Pneumatiksystem der Formschließeinheit einbezogen werden kann.

Zweckmäßigerweise ist der Aktuator nach Anspruch 4 fest und die Spannmutter auf dem Weg über den Aktuator drehbeweglich mit der Formschlussplatte verbunden, wodurch eine besonders kompakte und robuste Bauweise der Schalteinheit erhalten wird. Zum Verdrehen der Spindel- und der Spannmutterkombination ist nach Anspruch 5 vorzugsweise ein in der Lösestellung des Aktuators ansteuerbarer Drehantrieb vorgesehen.

Wie nach Anspruch 6 bevorzugt, ist der Aktuator die Gewindespindel mit Übermaß umgreifend auf der der Formschlussplatte abgewandten Seite der Spindelmutter angeordnet und gehäuseseitig an der Formschlussplatte befestigt und die Spannmutter ist zwischen Aktuator und Spindelmutter positioniert und unter Spannkraftwirkung in Richtung der Spindelmutter druckkraftbeaufschlagt, wodurch der Platzbedarf für die Doppelmutter-/Aktuatoranordnung weiter verringert wird.

Die Erfindung ist sowohl für holmlose als auch in der nach den Ansprüchen 7 bis 9 bevorzugten Weise für mit Führungsholmen für die bewegliche Formschlussplatte versehene Formschließeinheiten anwendbar, und zwar nach Anspruch 10 zweckmäßigerweise solche mit einem Kniehebelmechanismus für die Verfahrbewegung und die Verriegelung der beweglichen Formschlussplatte in der Schließlage und einer formhöhenverstellbaren Abstützplatte für den Kniehebelmechanismus.

Die Erfindung wird nunmehr anhand eines Ausführungsbeispiels in Verbindung mit den Zeichnungen näher erläutert. Es zeigen in stark schematisierter Darstellung:
- **Fig. 1**: eine Formschließeinheit nach der Erfindung in der Seitenansicht; und
- **Fig. 2**: einen vergrößerten Ausschnitt der Formschließeinheit nach Fig. 1 im Bereich der Formhöhenverstellung in teilweise geschnittener Darstellung.

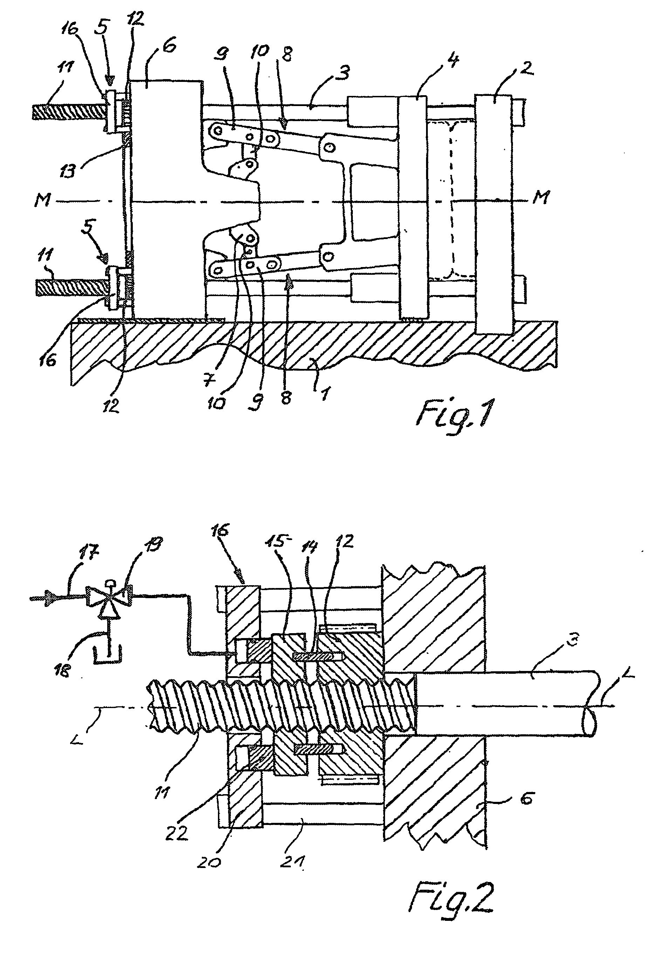

Die in den Fig. als Dreiplattenmaschine dargestellte Formschließeinheit enthält eine feststehend auf dem Maschinenbett 1 positionierte, erste Formschlussplatte 2, eine an Führungsholmen 3 in Richtung der Maschineachse M-M beweglich geführte, zweite Formschlussplatte 4 und eine dritte, über die Holme 3 mit der feststehenden Formschlussplatte 2 unter Zwischenschaltung einer insgesamt mit 5 bezeichneten Formhöhenverstelleinrichtung in Holmlängsrichtung einstellbar verbundene Formschlussplatte 6, die eine Abstützplatte für den Hubantrieb der beweglichen Formschlussplatte 4 bildet. Dieser besteht aus einem an der Formschlussplatte 6 befestigten (nicht gezeigten) Linearantrieb, einem von diesem hubbeweglich angetriebenen Kreuzjoch 7 und paarweise spiegelsymmetrisch zur Maschinenachse M-M angeordneten Kniehebelgestängen 8, welche einerseits mit der beweglichen Formschlussplatte 4 und andrerseits mit der Abstützplatte 6 gelenkig verbunden sind und von Seiten des Kreuzjochs 7 jeweils über einen an diesem und am stützplattenseitigen Kniehebel 9 der Kniehebelgestänge 8 angelenkten Zwischenhebel 10 in Schwenkrichtung angetrieben werden und dadurch die Verfahrbewegung und die Verriegelung der beweglichen Formschlussplatte 4 in der in Fig. 1 gezeigten Schließlage der gestrichelt dargestellten Formwerkzeugteile bewirken.

Wie Fig. 2 im einzelnen zeigt, sind die die Abstützplatte 6 durchgreifenden Endabschnitte der Führungsholme 3 jeweils als Gewindespindeln 11 ausgebildet und mit einer auf der Rückseite der Abstützplatte 6 angeordneten Spindelmutter 12 verschraubt. Durch einen in Fig. 1 schematisch durch ein Sonnenrad 13 veranschaulichten Drehantrieb können die Spindelmuttern 12 gemeinsam verdreht und dadurch die Position der Abstützplatte 6 bezüglich der Führungsholme 3 verändert oder nachkorrigiert werden. In der so eingestellten Formhöhenposition der Abstützplatte 6 wird die Spindelmutter 12 einerseits unter Aufhebung des für die Verstellbewegung der Spindelmutter 12 erforderlichen Axialspiels zur Abstützplatte 6 und andrerseits gewindespielfrei mit der Gewindespindel 11 drehfest verspannt.

Die hierfür vorgesehene Spannvorrichtung enthält eine auf der der Abstützplatte 6 abgewandten Rückseite der Spindelmutter 12 mit dieser z. B. über Gleitbolzen 14 in den Grenzen des Gewindespiels axialbeweglich, aber drehfest verbundene Spannmutter 15 und einen hydraulisch betriebenen Aktuator 16, welcher mittels eines an eine Druckleitung 17 und eine Entlüftungsleitung 18 angeschlossenen Dreiwegeventils 19 zwischen einer druckentlasteten Löse-und einer spannkrafterzeugenden Aktivstellung umschaltbar und mit seinem Gehäuse 20 die Gewindespindel 11 mit Übermaß umgreifend über Abstandhalter 21 fest an der Abstützplatte 6 montiert ist. Der Druckkolben 22 des Aktuators 16 ist entweder als zur Holmachse L-L konzentrischer, gemeinsam mit der Spannmutter 15 verdrehbarer und vorzugsweise einteilig an dieser angeformter Ringkolben ausgebildet oder besteht aus mehreren, in gleichen Abständen zur Holmachse L-L einander diametral gegenüberliegenden Einzelkolben, die in der Lösestellung des Aktuators 16 eine Drehbewegung der Spannmutter 15 bezüglich des Aktuatorgehäuses 20 ermöglichen.

Im druckaktivierten Zustand des Aktuators 16 wird die Abstützplatte 6 auf dem Weg über das Aktuatorgehäuse 20 an die Spindelmutter 12 angedrückt und die Spannmutter 15 seitens des oder der Druckkolben 22 gegensinnig zur Spindelmutter 12 mit der Gewindespindel 11 verspannt, so dass die Abstützplatte 6 nunmehr axial- und gewindespielfrei mit den Führungsholmen 3 verkoppelt und die Doppelmutter 12, 15 drehfest an der Gewindespindel 11 arretiert ist. In diesem Zustand werden die beim Schließzyklus vom Hubantrieb 7, 8, 10 auf die bewegliche Formschlussplatte 4 ausgeübten Schließ- und die zumeist noch um ein Vielfaches höheren Verriegelungskräfte, die als Reaktionskräfte auf die Abstützplatte 6 einwirken, von dieser unmittelbar über die Spindelmutter 12 an die Führungsholme 3 abgesetzt, so dass der Aktuator 16 von derartigen Belastungen freigehalten wird und lediglich die erheblich, nämlich um ca. 85%, geringeren, beim Öffnen und Entriegeln des Formwerkzeugs auf die Abstützplatte 6 einwirkenden Reaktionskräfte übertragen muss, welche auf dem Weg über das Aktuatorgehäuse 20 und den oder die druckbeaufschlagten Aktuatorkolben 22 entgegen der von diesen erzeugten Spannkraft an die Spannmutter 15 und die Führungsholme 3 abgesetzt werden. Dementsprechend niedrig lassen sich, verglichen mit den Leistungsanforderungen eines verriegelungskrafterzeugenden Stell- oder Hubantriebs, das Leistungsniveau und die Baugröße des Aktuators 16 dimensionieren.

Zum Lösen des Aktuators 16 wird das Dreiwegeventil 19 in die Entlüftungsstellung umgesteuert und dadurch der Aktuator 16 spannkraftentlastet, so dass das Axial- und Gewindespiel der Doppelmutter 12, 15 bezüglich der Abstützplatte 6 und der Gewindespindel 11 freigegeben wird und sich die Doppelmutter 12, 15 nunmehr ungehindert seitens des Drehantriebs (Sonnenrad 13) in eine neue Formhöhenposition der Abstützplatte 6 bezüglich der Führungsholme 3 verdrehen lässt.

Da der Löse-, Verdreh- und erneute Spannvorgang der Doppelmutter-/Aktuatoranordnung 12, 15, 16 sehr rasch in der Auffahrphase der beweglichen Formschlussplatte 4 erfolgen kann, ist eine Formhöhenverstellung der Formschließeinheit ohne Zeitverlust während des laufenden Arbeitszyklus möglich.

## Patentansprüche

1. Formschließeinheit, insbesondere für eine Spritzgießmaschine, mit mindestens einer feststehenden und einer beweglichen Formschlussplatte, einem Hubantrieb für die bewegliche Formschlussplatte, mindestens einer längenverstellbaren, aus einer Gewindespindel und einer eine der Formschlussplatten abstützenden Spindelmutter bestehenden, hub- und in der Schließlage der beweglichen Formschlussplatte verriegelungskraftübertragenden Gewindeverbindung zur Formhöhenverstellung und mit einer die Spindelmutter relativ zur Gewindespindel arretierenden, zur Längenverstellung der Gewindeverbindung selektiv lösbaren Spannvorrichtung, **dadurch gekennzeichnet, dass**
die Spannvorrichtung eine drehfest, aber axial begrenzt beweglich mit der Spindelmutter (12) verkoppelte Spannmutter (15) und einen die Spindelmutter unter Zwischenlage der zugeordneten Formschlussplatte (6) mit der Spannmutter verspannenden, unabhängig von der Hubposition des Hubantriebs (7, 8, 10) lösbaren Aktuator (16) enthält, wobei die Gewindespindel (11) und die Formschlussplatte unmittelbar über die Spindelmutter schließ-und verriegelungskraftübertragend und über den Aktuator (16) entgegen der von diesem erzeugten Spannkraft öffnungskraftübertragend miteinander verkoppelt sind.

2. Formschließeinheit nach Anspruch 1, **dadurch gekennzeichnet, dass** der Aktuator (16) fremdkraftbetätigt in die spannkrafterzeugende Aktivstellung um- und aus dieser selbsttätig zurückschaltbar ist.

3. Formschließeinheit nach einem der vorhergehenden Ansprüche, **dadurch gekennzeichnet, dass**
der Aktuator (16) hydraulisch oder pneumatisch betätigt ist.

4. Formschließeinheit nach einem der vorhergehenden Ansprüche, mit einer drehfest angeordneten Gewindespindel und einer mit Axialspiel drehbar an der Formschlussplatte angeordneten Spindelmutter, **dadurch gekennzeichnet, dass**
der Aktuator (16) fest und die Spannmutter (15) auf dem Weg über den Aktuator drehbeweglich mit der Formschlussplatte (6) verbunden ist.

5. Formschließeinheit nach einem der vorhergehenden Ansprüche, **dadurch gekennzeichnet, dass**
zur Längenverstellung der Gewindeverbindung (11, 12, 15) ein in der Lösestellung des Aktuators (16) ansteuerbarer Drehantrieb (Sonnenrad 13) vorgesehen ist.

6. Formschließeinheit nach einem der vorhergehenden Ansprüche, **dadurch gekennzeichnet, dass**
der Aktuator (16) die Gewindespindel (11) mit Übermaß umgreifend auf der der Formschlussplatte (6) abgewandten Seite der Spindelmutter (12) angeordnet und gehäuseseitig an der Formschlussplatte befestigt und die Spannmutter (15) spindelmutterseitig des Aktuators positioniert und unter Spannkraftwirkung in Richtung der Spindelmutter druckkraftbeaufschlagt ist.

7. Formschließeinheit nach einem der vorhergehenden Ansprüche, **dadurch gekennzeichnet, dass**
die aktuatorbetätigte Spannvorrichtung (11, 12, 15, 16) an der den Hubantrieb abstützenden Formschlussplatte (6) der Formschließeinheit angeordnet ist.

8. Formschließeinheit nach Anspruch 7, bei der die Abstützplatte über Führungsholme für die bewegliche Formschlussplatte mit der feststehenden Formschlussplatte verbunden ist, **dadurch gekennzeichnet, dass** der Aktuator (16) im Bereich des die Abstützplatte (6) durchgreifenden, als Gewindespindel (11) für die Spann- und Spindelmutter (12, 15) ausgebildeten Holmendabschnitts angeordnet ist.

9. Formschließeinheit nach Anspruch 8, **dadurch gekennzeichnet, dass** jeder Führungsholm (3) mit einer Gewindeverbindung einschließlich einer aktuatorbetätigten Spannvorrichtung (11, 12, 15, 16) versehen ist und die einzelnen Aktuatoren (16) zeitgleich umschaltbar sind.

10. Formschließeinheit nach einem der vorhergehenden Ansprüche, mit einem vom Hubantrieb betätigten Kniehebelmechanismus für die Verfahrbewegung und Verriegelung der beweglichen Formschlussplatte in der Schließlage, **dadurch gekennzeichnet, dass**
der antriebsseitige Kniehebel (9) des Kniehebelmechanismus (8) an der mit der Gewindeverbindung und der aktuatorbetätigten Spannvorrichtung (11, 12, 15, 16) versehenen Formschlussplatte (6) der Formschließeinheit gelenkig abgestützt ist.

## Claims

1. Mould closing unit, in particular for an injection moulding machine, comprising at least one fixed and one movable platen, a stroke drive for the movable platen, at least one length-adjustable threaded connection for adjusting the height of the mould, which threaded connection comprises a threaded spindle and a spindle nut supporting one of the platens and transmits a stroking force as well as a locking force when the movable platen is in a closing position, and a clamping device which locks the spindle nut relative to the threaded spindle and is selectively releasable for adjusting the length of the threaded connection,
**characterised in that**
the clamping device comprises a clamping nut (15), which is coupled to the spindle nut (12) such as to be non-rotational but axially movable to a limited extent, and an actuator (16), which clamps the spindle nut with the clamping nut while the allocated platen (6) is disposed therebetween and is releasable irrespective of the stroke position of the stroke drive (7, 8, 10), wherein the threaded spindle (11) and the platen are coupled to each other directly by means of the spindle nut such as to ensure transmission of the closing and locking force, and in order to ensure transmission of the opening force, they are coupled by means of the actuator (16) in a direction opposite to the clamping force generated thereby.

2. Mould closing unit according to claim 1, **characterised in that**
the actuator (16) is switchable into the clamping-force generating active position by means of an external force, and is automatically switchable back into the original position.

3. Mould closing unit according to one of the above claims, **characterised in that**
the actuator (16) is operated hydraulically or pneumatically.

4. Mould closing unit according to one of the above claims, comprising a threaded spindle which is mounted in a non-rotational manner and a spindle nut which is mounted on the platen for rotation at an axial clearance, **characterised in that**
the actuator (16) is rigidly connected to the platen (6) and the clamping nut (15) is connected therewith for rotational movement by means of the actuator.

5. Mould closing unit according to one of the above claims, **characterised in that**
a rotary drive (sun gear 13) is provided for length adjustment of the threaded connection (11, 12, 15), the rotary drive being operable in the release position of the actuator (16).

6. Mould closing unit according to one of the above claims, **characterised in that**
the actuator (16) surrounding the threaded spindle (11) is arranged on the side of the spindle nut (12) remote from the platen (6), wherein the actuator (16) is oversized with respect to the threaded spindle (11), is fastened on the platen near the housing, positions the clamping nut (15) near the spindle nut of the actuator and is acted upon by a pressure force in the direction of the spindle nut such as to exert a clamping force.

7. Mould closing unit according to one of the above claims, **characterised in that**
the actuator-operated clamping device (11, 12, 15, 16) is arranged on the platen (6) of the mould closing unit, the platen (6) supporting the lift drive.

8. Mould closing unit according to claim 7 in which the support platen is connected to the fixed platen by means of guide pins for the movable platen, **characterised in that**
the actuator (16) is arranged in the vicinity of the pin end portion which extends through the support platen (6) and is designed as a threaded spindle (11) for the clamping and spindle nut (12, 15).

9. Mould closing unit according to claim 8, **characterised in that**
each guide pin (3) is provided with a threaded connection including an actuator-operated clamping device (11, 12, 15, 16) and the individual actuators (16) are switchable simultaneously.

10. Mould closing unit according to one of the above claims, comprising a knee lever mechanism, operated by the lift drive, for the displacement and locking of the movable platen in the closing position, **characterised in that**
arranged near the drive, the knee lever (9) of the knee lever mechanism (8) is supported on the platen (6) of the mould closing unit in an articulated manner, the platen (6) being provided with the threaded connection and the actuator-operated clamping device (11, 12, 15, 16).

## Revendications

1. Unité de fermeture de moule, en particulier pour une machine de moulage par injection, comprenant au moins une plaque de fermeture de moule fixe et une plaque de fermeture mobile, une commande de levage pour la plaque de fermeture de moule mobile, au moins une liaison filetée, destinée à régler la hauteur du moule, transmettant la force de verrouillage dans la position de levage et de fermeture de la plaque de fermeture de moule mobile, constituée d'une broche filetée et d'un écrou à broche soutenant une des plaques de fermeture de moule et comprenant un dispositif de serrage bloquant l'écrou à broche par rapport à la broche filetée, pouvant être desserré de manière sélective pour régler la longueur de la liaison filetée, **caractérisée en ce**
**que** le dispositif de serrage contient un écrou tendeur (15) couplé de manière solidaire en rotation mais mobile de manière axialement limitée à l'écrou à broche (12) et un actionneur (16) déformant l'écrou à broche lors de la position intermédiaire de la plaque de fermeture de moule (6) associée avec l'écrou tendeur, pouvant être desserré indépendamment de la position de levage de la commande de levage (7, 8, 10), la broche filetée (11) et la plaque de fermeture de moule étant couplées l'une à l'autre directement par l'écrou à broche en transmettant une force de fermeture et de verrouillage et par l'actionneur (16) dans le sens inverse de la force de tension produite par celui-ci en transmettant une force d'ouverture.

2. Unité de fermeture de moule selon la revendication 1, **caractérisée en ce que** l'actionneur (16) peut être commuté en étant actionné par une force extérieure dans la position active produisant la force de serrage et revenir automatiquement de celle-ci.

3. Unité de fermeture de moule selon l'une quelconque des revendications précédentes, **caractérisée en ce**
**que** l'actionneur (16) est actionné de façon hydraulique ou pneumatique.

4. Unité de fermeture de moule selon l'une quelconque des revendications précédentes, comprenant une broche filetée disposée de manière solidaire en rotation et un écrou à broche disposé de manière rotative sur la plaque de fermeture de moule avec un jeu axial, **caractérisée en ce**
**que** l'actionneur (16) est relié solidement, et l'écrou tendeur (15) est relié sur le trajet passant par l'actionneur de façon mobile en rotation à la plaque de fermeture de moule (6).

5. Unité de fermeture de moule selon l'une quelconque des revendications précédentes, **caractérisée en ce**
**qu'**une commande de rotation (roue solaire 13) pouvant être commandée dans la position desserrée de l'actionneur (16) est prévue pour régler la longueur de la liaison filetée (11, 12, 15).

6. Unité de fermeture de moule selon l'une quelconque des revendications précédentes, **caractérisée en ce**
**que** l'actionneur (16) est disposé sur la face de l'écrou à broche (12) opposée à la plaque de fermeture de moule (6) de façon à envelopper exagérément la broche filetée (11) et est fixé côté boîtier sur la plaque de fermeture de moule et l'écrou tendeur (15) est positionné côté écrou à broche de l'actionneur et est sollicité par une force de pression sous l'effet de la force de serrage en direction de l'écrou à broche.

7. Unité de fermeture de moule selon l'une quelconque des revendications précédentes, **caractérisée en ce**
**que** le dispositif de serrage (11, 12, 15, 16) actionné par un actionneur est disposé sur la plaque de fermeture de moule (6) de l'unité de fermeture de moule soutenant l'entraînement de montée.

8. Unité de fermeture de moule selon la revendication 7, dans laquelle la plaque d'appui est reliée par des longerons de guidage pour la plaque de fermeture de moule mobile à la plaque de fermeture de moule fixe, **caractérisée en ce**
**que** l'actionneur (16) est disposé dans la zone de la section d'extrémité de longeron traversant la plaque d'appui (6), conçue comme une broche filetée (11) pour l'écrou tendeur et à broche (12, 15).

9. Unité de fermeture de moule selon la revendication 8, **caractérisée en ce**
**que** chaque longeron de guidage (3) est pourvu d'une liaison filetée y compris un dispositif de serrage actionné par un actionneur (11, 12, 15, 16) et les actionneurs individuels (16) peuvent être commutés au même moment.

10. Unité de fermeture de moule selon l'une quelconque des revendications précédentes, comprenant un mécanisme de genouillère actionné par la commande de levage pour le déplacement et le verrouillage de la plaque de fermeture mobile dans la position fermée, **caractérisée en ce**
**que** la genouillère côté entraînement (9) du mécanisme de genouillère (8) s'appuie contre la plaque de fermeture de moule (6) de l'unité de fermeture de moule pourvue de la liaison filetée et du dispositif de serrage actionné par un actionneur (11, 12, 15, 16).
